# EUROPEAN PATENT APPLICATION

(11) **EP 0 908 870 A1**
(43) Date of publication of application: **14.04.1999**
(21) Application number: 98308292.6
(22) Date of filing: 13.10.1998
(51) Int. Cl.: G11B 5/60

(54) **Magnetic head**

(30) Priority: 13.10.1997 JP 279081/97
(71) Applicant: Mitsumi Electric Company Ltd., Chofu-shi Tokyo (JP)
(72) Inventor: Sato, Masashi, c/o Yamagata Mitsumi Co., Ltd., Yamagata-shi, Yamagata (JP); Sampei, Hiroshi,c/o Yamagata Mitsumi Co., Ltd., Yamagata-shi, Yamagata (JP)
(74) Representative: Waldren, Robin Michael

(57) **Abstract**

A magnetic head includes a slider having a gap portion (3) formed on a head surface of the slider, and slits (12) which extend at sides of the gap portion from a trailing edge of the slider but do not reach a leading edge thereof.

## Description

### BACKGROUND OF THE INVENTION

### 1. Field of the Invention

The present invention generally relates to magnetic heads, and more particularly to a magnetic head used to perform a magnetic recording and reproducing operation in a state which a gap portion of the magnetic head is close to a magnetic disk which is rotating due to variation in a flow of air formed between the magnetic disk and the magnetic head.

### 2. Description of the Related Art

Recently, there has been considerable activity in the development of a magnetic head used to efficiently and effectively perform a magnetic recording and reproduction so that a gap portion of the magnetic head is close to a flexible magnetic disk that is rotated in a non-contact state caused by a variation in the flow of air resulting from a relative velocity between the surface of a slider of the magnetic head and the magnetic disk.

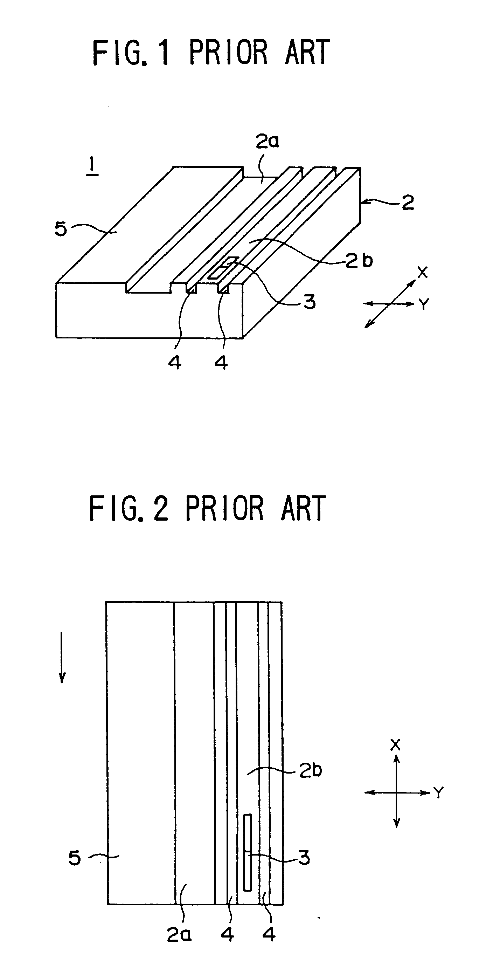

Fig. 1 is a perspective view of a conventional magnetic head, and Fig. 2 is a plan view thereof.

Referring to Figs. 1 and 2, a conventional magnetic head 1 has a slider 2, which has a head surface 2b located at the right side of a central groove 2a formed on the upper surface of the slider 2. The head surface 2b has a gap portion 3 and a pair of slots 4. The gap portion 3 is defined by placing thin-plate cores opposite each other. The pair of slots 4 extends in the tangential direction of the disk and functions to escape the flow of air formed on the head surface 2b. The slider 2 has a pressure applying part 5 located on the left side thereof. The pressure applying part 5 functions as a pressure applying pad, which urges the magnetic disk against the head surface of an opposing magnetic head.

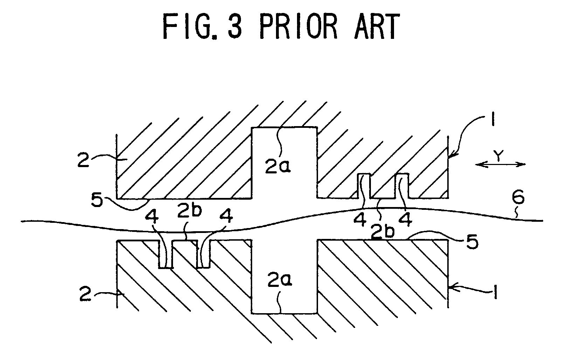

Fig. 3 is a cross-sectional view of the magnetic heads 1 viewed along the disk inserting direction. As shown in Fig. 3, the magnetic heads 1 are arranged so that the flexible magnetic disk 6 is sandwiched. The magnetic disk 6 passes between the magnetic heads 1, the magnetic disk 6 is deformed due to a negative pressure generated in the slots 4 caused by a variation in the flow of air and pressures respectively generated by the pressure applying parts 5 so that the magnetic disk 6 becomes close to the gap portions 3 of the magnetic heads 1.

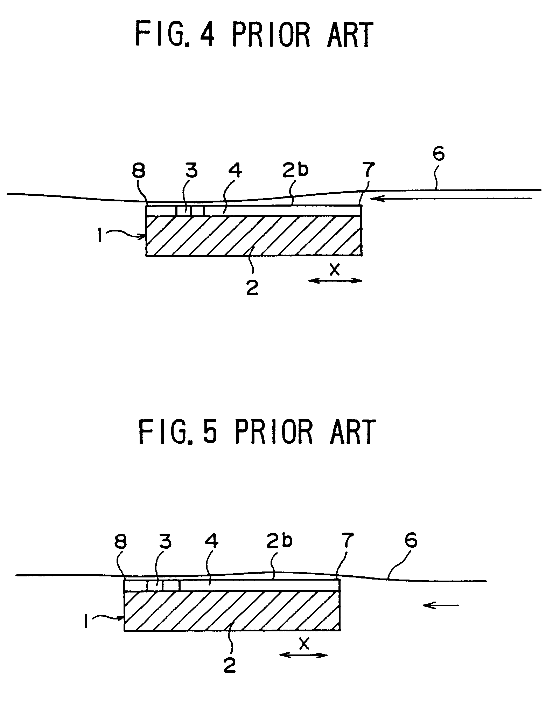

Fig. 4 is a cross-sectional view of the conventional magnetic head 1 viewed along the radial direction (Y-axis direction) of the magnetic head 1. The magnetic disk 6 is inserted in the direction indicated by an arrow. The air flows through the pair of slots 4 formed on the head surface 2b, and air flying force exerted on the head surface 2b is thus reduced. Hence, even in a case where the magnetic disk 6 is inserted at a standard height, the magnetic disk 6 and an leading edge of the magnetic head 1 are spaced apart from each other at a small interval.

Fig. 5 is a cross-sectional view of a situation in which the magnetic disk 6 is inserted at a height lower than the standard height. In this case, there is a possibility that the magnetic disk 6 may come into contact with the leading edge 7.

However, the conventional magnetic head 1 has the following disadvantage. The pair of slots 4 is formed over the entire width between the leading edge 7 and a trailing edge 8 of the magnetic head. Hence, the air flying force exerted on the entire head surface 2b is reduced over the entire width in the disk inserting direction (X-axis direction). Hence, as shown in Fig. 5, the reduced air flying force generated between the head surface 2b and the magnetic disk 6 due to a variation in the flow of air when the magnetic disk 6 is inserted at a height lower than the standard height, the magnetic disk 6 may contact the leading edge 7 and may be damaged.

### SUMMARY OF THE INVENTION

It is a general object of the present invention to provide a magnetic head in which the above disadvantages are eliminated.

A more specific object of the present invention is to provide a magnetic head in which a leading edge can be prevented from contacting a magnetic disk.

The above objects of the present invention are achieved by a magnetic head comprising: a slider having a gap portion formed on a head surface of the slider; and slits which extend at sides of the gap portion from a trailing edge of the slider but do not reach a leading edge thereof.

The magnetic head may be configured so that the slits slope down to the trailing edge.

The magnetic head may be configured so that the slider has a central groove, and the slits have a depth approximately equal to that of the central groove.

The magnetic head may be configured so that the slider has a central groove, and the slits have a depth less than that of the central groove.

The above objects of the present invention are also achieved by a magnetic head comprising: a slider having a gap portion formed on a head surface of the slider; and a slit formed so that the slit surrounds the gap portion.

The magnetic head may be configured so that the slit has an oval shape.

The magnetic head may be configured so that it further comprises a passage connecting the trailing edge and the slit.

The magnetic head may be configured so that it further comprises passages connecting the slit and side ends of the head surface.

The magnetic head may be configured so that the passages extend in opposite directions.

The magnetic head may be configured so that the slit has a trapezoidal shape.

The magnetic head may be configured so that the slits has a rectangular shape.

The above objects of the present invention are also achieved by a magnetic head comprising: a slider having a gap portion formed on a head surface of the slider; and slits which extend at sides of the gap portion from a trailing edge of the slider but do not reach a leading edge thereof, the head surface having, in the vicinity of the gap portion, a width narrower than that in a remaining portion of the head surface.

The magnetic head may be configured so that the slits have a depth less than that of a central groove.

The above objects of the present invention are also achieved by a magnetic head comprising: a slider having a gap portion formed on a head surface of the slider; and slits which extend at sides of the gap portion from a trailing edge of the slider but do not reach a leading edge thereof, the head surface having a width which is gradually reduced towards the trailing edge.

### BRIEF DESCRIPTION OF THE DRAWINGS

Other objects, features and advantages of the present invention will become more apparent from the following detailed description when read in conjunction with the accompanying drawings, in which:
Fig. 1 is a perspective view of a conventional magnetic head;
Fig. 2 is a cross-sectional view of the magnetic head shown in Fig. 1;
Fig. 3 is a cross-sectional views of two conventional magnetic heads which sandwich a magnetic disk;
Fig. 4 is a cross-sectional view which is viewed from the radial direction of the magnetic disk and which shows how the magnetic disk is inserted at a standard height;
Fig. 5 is a cross-sectional view of a situation in which the magnetic disk is inserted at a height lower than the standard height;
Fig. 6 is a perspective view of a magnetic head 11 according to a first embodiment of the present invention;
Fig. 7 is a cross-sectional view of the magnetic head shown in Fig. 6 along an X axis;
Fig. 8 is a graph of a disk flying magnitude as a function of position on an upper surface of the slider;
Fig. 9 is a view showing a position of the magnetic disk with respect to a magnetic head when the magnetic disk is inserted at a standard height;
Fig. 10 is a view showing A position of the magnetic disk with respect to the magnetic head when the magnetic disk is inserted at a height lower than the standard height;
Fig. 11 is a cross-sectional view of a magnetic head according to a variation of the first embodiment of the present invention, in which the magnetic disk is inserted at the standard height;
Fig. 12 shows the magnetic disk which is inserted at a height lower than the standard height with respect to the magnetic head;
Fig. 13 is a perspective view of a magnetic head according to a second embodiment of the present invention;
Fig. 14 is a plan view of the magnetic head 15 shown in Fig. 13;
Fig. 15 shows a position of the magnetic disk with respect to the magnetic head shown in Figs. 13 and 14;
Fig. 16 is a plan view of a part of a first variation of the second embodiment of the present invention;
Fig. 17 is a plan view of a part of a second variation of the second embodiment of the present invention;
Fig. 18 is a plan view of a part of a third variation of the second embodiment of the present invention;
Fig. 19 is a plan view of a part of a fourth variation of the second embodiment of the present invention;
Fig. 20 is a perspective view of a magnetic head according to a third embodiment of the present invention;
Fig. 21 a cross-sectional view of the magnetic head shown in Fig. 20 with respect to the magnetic disk;
Fig. 22 is a perspective view of a first variation of the third embodiment of the present invention;
Fig. 23 is a perspective view of a second variation of the third embodiment of the present invention;
Fig. 24 is a perspective view of a third variation of the third embodiment of the present invention; and
Fig. 25 shows the position of the magnetic disk with respect to the magnetic head shown in Fig. 24.

### DESCRIPTION OF THE PREFERRED EMBODIMENTS

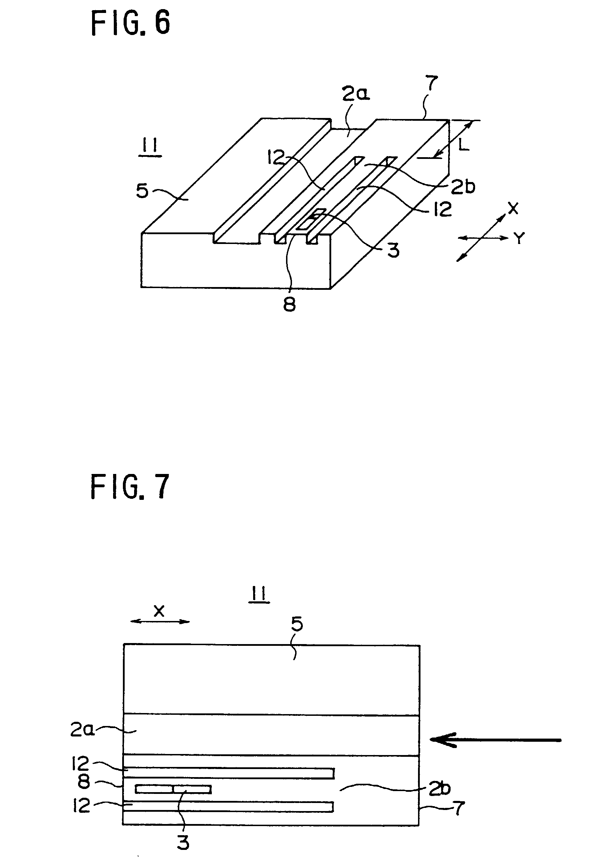

Fig. 6 is a perspective view of a magnetic head 11 according to a first embodiment of the present invention. Fig. 7 is a cross-sectional view of the magnetic head along the X axis. In Figs. 6 and 7, parts that are the same as those shown in the previously described figures are given the same reference numbers.

The magnetic head 11 has a pair of slots 12 extending in parallel in the disk inserting direction (X-axis direction). The slots 12 are formed on the head surface 2b of the slider 2 and are located at both sides of the gap portion 3 so that the slots 12 extend in the X-axis direction within the range except for a given range L between the leading edge 7 and the ends of the slots 12. In other words, the slots 12 extend in the disk inserting direction (X-axis direction) from the trailing edge of the slider to the end of the range L so that the slots 12 at both sides of the gap portion 3. The slots 12 can be formed so as to an arbitrary length by a process such as etching or ion milling. It is to be noted that the slots 12 are not formed the portion of the head surface 2b in the vicinity of the leading edge 7.

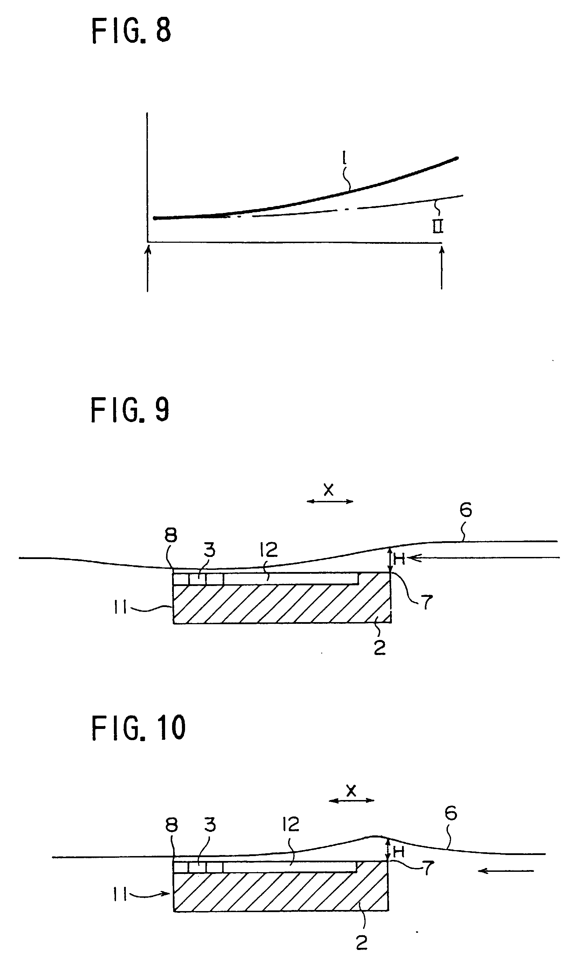

Fig. 8 is a graph of a disk flying magnitude as a function of position on the upper surface of the slider 2. A curve I is related to the present invention using the magnetic head 11 while a curve Ii is related to the prior art using the conventional magnetic head 1. In the vicinity of the trailing edge 8 in which the slots 12 or 4 are formed, the disk flying magnitude obtained by the present invention is approximately equal to that obtained by the prior art. The disk flying magnitude obtained in the vicinity of the leading edge 7 by the present invention is greater than that obtained in the vicinity of the leading edge 7 by the prior art. The slots 12 of the magnetic head 11 are not formed in the vicinity of the leading edge 7, while the slots 4 of the conventional magnetic head 1 are formed in the vicinity of the leading edge 7.

Fig. 9 is a view showing the position of the magnetic disk 6 with respect to the magnetic head 11 when the magnetic disk 6 is inserted at the standard height. As shown in Fig. 9, a sufficient height (a sufficient disk flying height) H of the magnetic disk 6 with respect to the head surface 2b located in the vicinity of the leading edge 7 is available when the magnetic disk 6 is inserted at the standard height. Hence, there is no possibility that the magnetic disk 6 may contact the leading edge 7.

Fig. 10 is a view showing the position of the magnetic disk 6 with respect to the magnetic head 11 when the magnetic disk 6 is inserted at a height lower than the standard height. As shown in Fig. 10, a sufficient height H is available in the vicinity of the leading edge 7 due to the air flying force obtained on the head surface 2b even when the magnetic disk 6 is inserted at a height lower than the standard height.

As described above, the flying force in the vicinity of the gap portion 3 of the magnetic head 11 is reduced so that the magnetic disk 6 can be closer to the gap portion 3. Further, the flying force in the vicinity of the leading edge 7 is increased so that the magnetic disk 6 can be prevented from contacting the leading edge 7.

The above magnetic head 11 can be modified so that the leading edge 7 has a gentle chamfer surface by a blend process or the like, so that the influence of the magnetic head 11 to the magnetic disk 6 can be reduced.

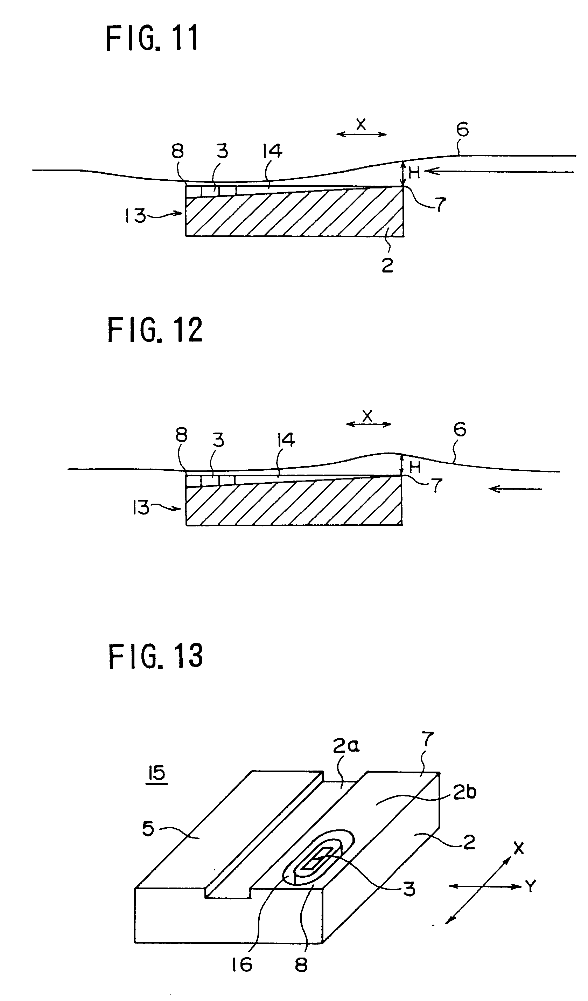

Fig. 11 is a cross-sectional view of a magnetic head 13 according to a variation of the first embodiment of the present invention, in which the magnetic disk 6 is inserted at the standard height. As shown in Fig. 11, the magnetic head 13 has slope slits 14, which are replaced by the slits 12 and are inclined at a given angle. The slope slots 14 are inclined towards the trailing edge 8 from the end of the length L measured from the leading edge 7. Hence, the slope slots 14 are not formed in the vicinity of the leading edge 7. The slope slots 14 can be formed so as to be inclined at an angle by means of a diamond blade or the like.

When the magnetic disk 6 is inserted at the standard height with respect to the magnetic head 13 having the slope slots 14, a sufficient height H (flying magnitude) of the magnetic disk 6 with respect to the leading edge 7 is available. Hence, there is no possibility that the magnetic disk 6 may contact the leading edge 7.

Fig. 12 shows the magnetic disk 6 which is inserted at a height lower than the standard height with respect to the magnetic head 13. As shown in Fig. 12, even when the inserting height of the magnetic disk 6 is relatively low, a sufficient height of the magnetic head 6 is available in the vicinity of the leading edge 7 due to the air flying force available on the head surface 2b in the vicinity of the leading edge 7. Hence, it is possible to reduce the flying force in the vicinity of the gap portion 3 and make the magnetic disk 6 closer to the gap portion 3. Further, it is possible to increase the flying force in the vicinity of the leading edge 7 and thus prevent the magnetic disk 6 from contacting the leading edge 7.

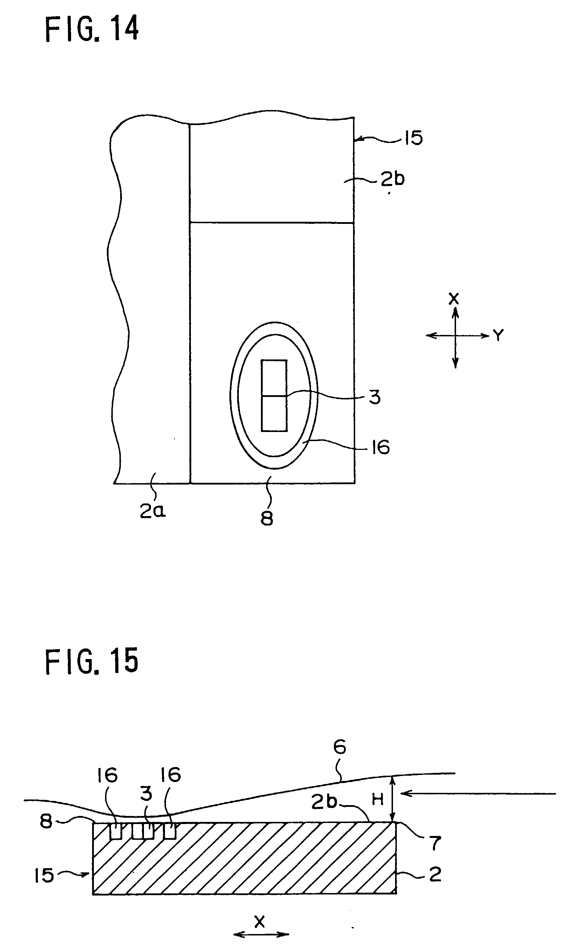

Fig. 13 is a perspective view of a magnetic head 15 according to a second embodiment of the present invention. Fig. 14 is a plan view of the magnetic head 15.

Referring to Figs. 13 and 14, the magnetic head 15 has a slit 16 having an oval shape which surrounds the gap portion 3. The slit 16 is not formed in the vicinity of the leading edge 7. Hence, the flow of air located in the vicinity of the gap portion 3 can escape to the oval slit 16, so that the flying magnitude optimal to the magnetic recording and reproducing can be obtained only in the vicinity of the gap portion 3.

If the slit 16 is sufficiently shallow (equal to, for example, 0.1 to 1 µm), a negative-pressure effect will be caused by the slit 16, and the disk flying magnitude available in the vicinity of the gap portion 3 can be reduced. If the slit 16 is sufficiently deep (equal to, for example, a few microns to 75 µm (equal to the thickness of the disk 6) or more, the disk flying magnitude available in the vicinity of the gap portion 3 can be reduced due to pressurilization of the flow of air.

Fig. 15 shows the position of the magnetic disk with respect to the magnetic head 15. Even if the magnetic disk 6 is inserted at a height lower than the standard height, a sufficient height H of the magnetic disk 6 is available in the vicinity of the leading edge 7 due to the air flying force obtained on the head surface 2b of the leading edge 7. Hence, it is possible to reduce the flying force in the vicinity of the gap portion 3 and make the magnetic disk 6 closer to the gap portion 3. Further, it is possible to increase the flying force in the vicinity of the leading edge 7 and thus prevent the magnetic disk 6 from contacting the leading edge 7.

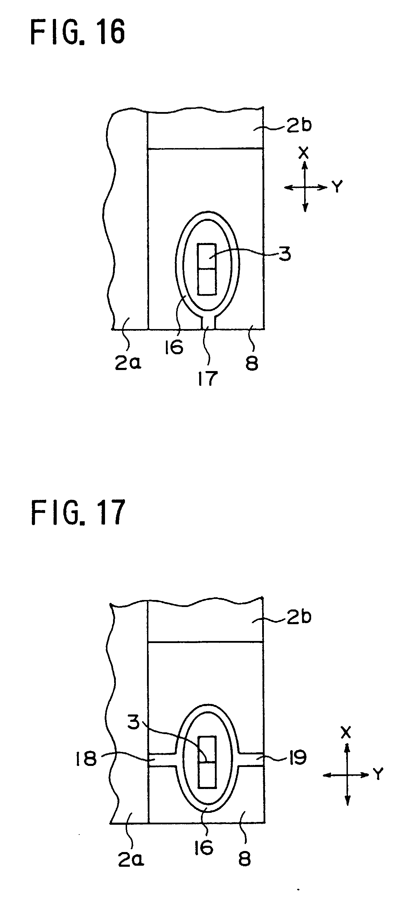

Fig. 16 is a plan view of a part of a first variation of the second embodiment of the present invention. As shown in Fig. 16, a passage 17 is joined to the oval slit 16 and extends to the trailing edge 8. Hence, air located in the vicinity of the gap portion 3 can escape to the side end surface of the slider through the oval slit 16 and the passage 17. Hence, it is possible to stably obtain, only in the vicinity of the gap portion 3, the small floating magnitude optimal to the magnetic recording and reproducing.

Fig. 17 is a plan view of a part of a second variation of the second embodiment of the present invention. As shown in Fig. 17, passages 18 and 19 are joined to the oval slit 16 on two opposing sides thereof and extend to the sides of the slider 2 in the Y-axis direction. Hence, air located in the vicinity of the gap portion 3 can escape to the central groove 2a and the sides of the slider 2 through the slit 16 and the passages 18 and 19. Thus, it is possible to stably obtain, only in the vicinity of the gap portion 3, the small floating magnitude optimal to the magnetic recording and reproducing.

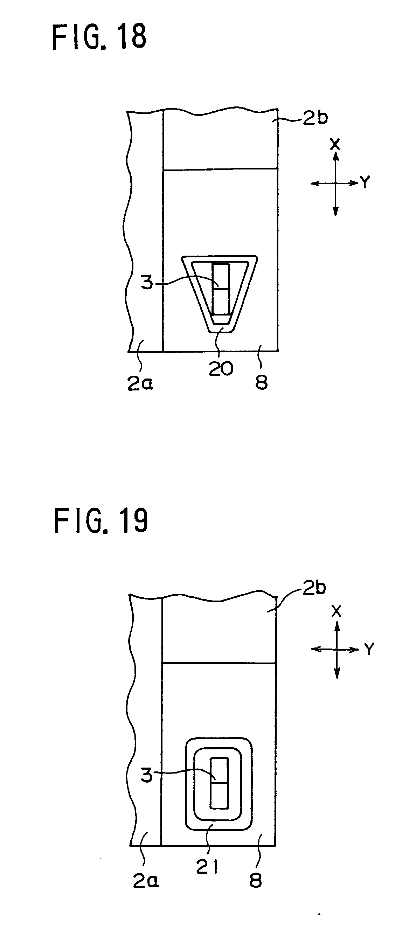

Fig. 18 is a plan view of a part of a third variation of the second embodiment of the present invention. As shown in Fig. 13, the magnetic head 15 has a slit 20 formed in a trapezoidal shape so as to surround the gap portion 3. Hence, air located in the vicinity of the gap portion 3 can escape to the slit 20 so that a low flying magnitude optimal to the magnetic recording and reproducing can be obtained only in the vicinity of the gap portion 3.

The passage 17 or passages 18 and 19 can be formed with respect to the slit 20, so that the negative-pressure effect can be enhanced in the vicinity of the gap portion 3.

Fig. 19 is a plan view of a part of a fourth variation of the second embodiment of the present invention. As shown in Fig. 19, the magnetic head 15 has a slit 21 formed in a rectangular shape so as to surround the gap portion 3. Hence, air located in the vicinity of the gap portion 3 can escape to the slit 21 so that a low flying magnitude can be obtained only in the gap portion 3.

The passage 17 or passages 18 and 19 can be formed with respect to the slit 21, so that the negative-pressure effect can be enhanced in the vicinity of the gap portion 3.

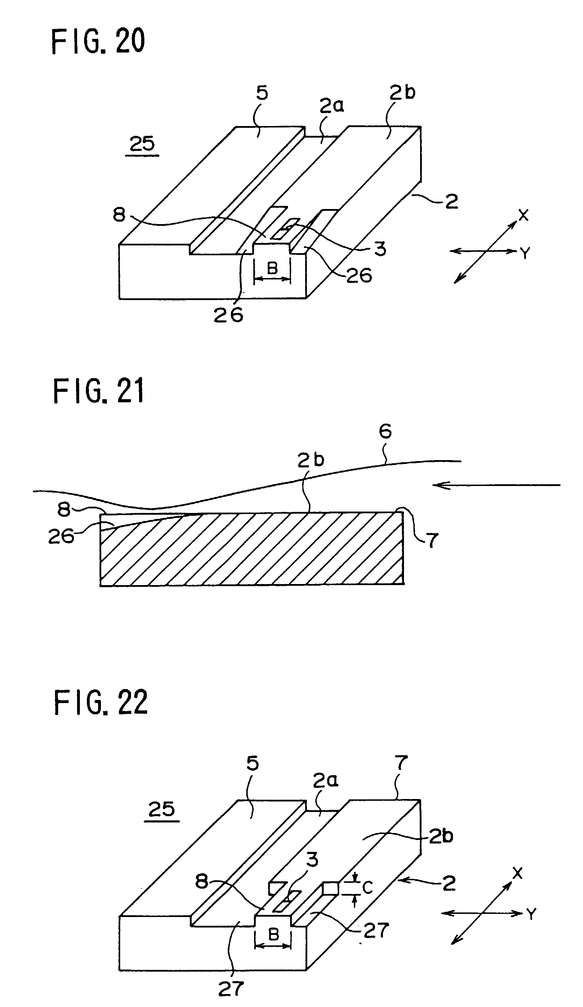

Fig. 20 is a perspective view of a magnetic head 25 according to a third embodiment of the present invention. Fig. 21 a cross-sectional view of the magnetic head 25 with respect to the magnetic disk 6. In Figs. 20 and 21, parts that are the same as those shown in the previously described figures are given the same reference numbers.

As shown in Fig. 20, the magnetic head 25 has slits 26 formed so that the head surface 2b has a reduced width B in the vicinity of the gap portion 3. Air located in the vicinity of the gap portion 3 can escape to the side surfaces of the slider 2 through the slope slits 26 so that a low flying magnitude optimal to the magnetic recording and reproducing can stably be obtained only in the vicinity of the gap portion 3.

The slope slits 26 are inclined from the vicinity of the gap portions 3 towards the trailing edge 8 and slope down to the trailing edge 8. In other words, the slope slits 26 are not formed in the leading edge 7. The slits 26 can be formed so as to be inclined at an arbitrary angle by means of a diamond blade or the like.

7. Hence, it is possible to reduce the flying force in the vicinity of the gap portion 3 and make the magnetic disk 6 closer to the gap portion 3. Further, it is possible to increase the flying force in the vicinity of the leading edge 7.

As shown in Fig. 21, even if the magnetic disk 6 is inserted at a height lower than the standard height. Hence, a sufficient height H of the magnetic disk 6 is available in the vicinity of the leading edge 7 due to the air flying force obtained on the head surface 2b of the leading edge 7. Hence, it is possible to reduce the flying force in the vicinity of the gap portion 3 and make the magnetic disk 6 closer to the gap portion 3. Further, it is possible to increase the flying force in the vicinity of the leading edge 7 and thus prevent the magnetic disk 6 from contacting the leading edge 7.

Fig. 22 is a perspective view of a first variation of the third embodiment of the present invention. As shown in Fig. 22, slits 27 are formed so that the slits 27 extend towards the trailing edge 8 from both sides of the gap portion 3 in the X-axis direction. The depth C of the slits 27 is constant and is approximately equal to the depth of the central groove 2a. The slits 27 provide the negative-pressure effect.

When the depth C of the slits 27 is approximately equal to 0.1 µm to a few microns, the negative-pressure effect is generated in the vicinity of the gap portion 3. Hence, the flying magnitude of the magnetic disk 6 can be reduced. Hence, the flow of air can escape to the slits 27 in the vicinity of the gap portion 3, so that a low flying magnitude optimal to the magnetic recording and reproducing can stably be obtained only in the vicinity of the gap portion 3.

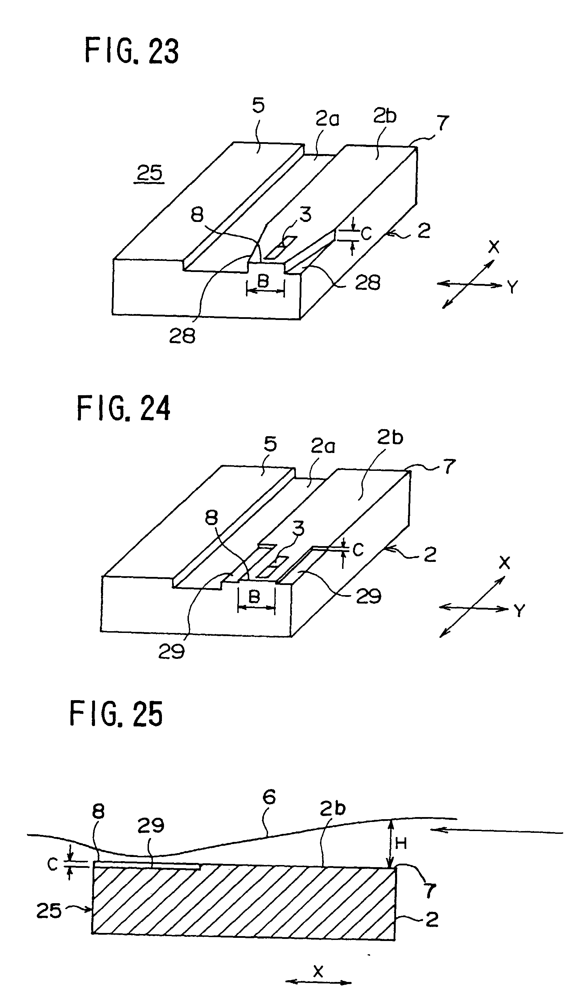

Fig. 23 is a perspective view of a second variation of the third embodiment of the present invention. As shown in Fig. 23, slits 28 extend towards the trailing edge 8 from both sides of the gap portion 3 and are inclined with respect to the X-axis direction. The slits 28 horizontally extend and the depth C thereof is constant. The side edges of the head surface 2b are inclined with respect to the Y-axis direction so that the head surface 2b measured at the trailing edge 8 has the smallest width B. In other words, the head surface 2b has a width which is gradually reduced towards the trailing edge 8. Hence, the flow of air located in the vicinity of the gap portion 3 is guided by the slits 28 and can escape to the side ends of the slider. Hence, a low flying magnitude optimal to the magnetic recording and reproducing can stably be obtained only in the vicinity of the gap portion 3.

Fig. 24 is a perspective view of a third variation of the third embodiment of the present invention. Fig. 25 shows the position of the magnetic disk 6 with respect to the magnetic head shown in Fig. 24.

As shown in Fig. 24, slits 29 extend towards the trailing edge 8 from both sides of the gap portion 3, and the depth C of the slits 29 is less than that of the slits 28 shown in Fig. 23. The depth C of the slits 29 is constant and is approximately equal to, for example, 0.1 µm to a few microns. The slits 29 cause the negative-pressure effect and reduces the disk flying magnitude in the vicinity of the gap portion 3. Hence, a low flying magnitude optimal to the magnetic recording and reproducing can stably be obtained only in the vicinity of the gap portion 3.

As shown in Fig. 25, even if the magnetic disk 6 is inserted at a height lower than the standard height with respect to the magnetic head 25, a sufficient height of the magnetic disk 6 is available in the vicinity of the leading edge 7 due to the air flying force on the head surface 2b in the vicinity of the leading edge 7. Hence, it is possible to reduce the flying force in the vicinity of the gap portion 3 and make the magnetic disk 6 closer to the gap portion 3. Further, it is possible to increase the flying force in the vicinity of the leading edge 7 and thus prevent the magnetic disk 6 from contacting the leading edge 7.

The present invention is not limited to the specifically disclosed embodiments, and variations and modifications may be made without departing from the scope of the present invention.

## Claims

1. A magnetic head comprising:
a slider having a gap portion formed on a head surface of the slider; and
slits which extend at sides of the gap portion from a trailing edge of the slider but do not reach a leading edge thereof.

2. The magnetic head as claimed in claim 1, wherein the slits slope down to the trailing edge.

3. The magnetic head as claimed in claim 1, wherein the slider has a central groove, and the slits have a depth approximately equal to that of the central groove.

4. The magnetic head as claimed in claim 1, wherein the slider has a central groove, and the slits have a depth less than that of the central groove.

5. A magnetic head comprising:
a slider having a gap portion formed on a head surface of the slider; and
a slit formed so that the slit surrounds the gap portion.

6. The magnetic head as claimed in claim 5, wherein the slit has an oval shape.

7. The magnetic head as claimed in claim 5, further comprising a passage connecting the trailing edge and the slit.

8. The magnetic head as claimed in claim 5, further comprising passages connecting the slit and side ends of the head surface.

9. The magnetic head as claimed in claim 8, wherein the passages extend in opposite directions.

10. The magnetic head as claimed in claim 5, wherein the slit has a trapezoidal shape.

11. The magnetic head as claimed in claim 5, wherein the slits has a rectangular shape.

12. A magnetic head comprising:
a slider having a gap portion formed on a head surface of the slider; and
slits which extend at sides of the gap portion from a trailing edge of the slider but do not reach a leading edge thereof,
the head surface having, in the vicinity of the gap portion, a width narrower than that in a remaining portion of the head surface.

13. The magnetic head as claimed in claim 12, wherein the slits have a depth less than that of a central groove.

14. A magnetic head comprising:
a slider having a gap portion formed on a head surface of the slider; and
slits which extend at sides of the gap portion from a trailing edge of the slider but do not reach a leading edge thereof,
the head surface having a width which is gradually reduced towards the trailing edge.
